(19) Europäisches Patentamt
European Patent Office
Office européen des brevets

(11) EP 0 776 956 A2

(12) # EUROPEAN PATENT APPLICATION

(43) Date of publication:
**04.06.1997 Bulletin 1997/23**

(51) Int Cl.[6]: **C09J 171/02**, C09J 183/04, C08G 65/32

(21) Application number: **96308611.1**

(22) Date of filing: **28.11.1996**

(84) Designated Contracting States:
**DE FR GB**

(30) Priority: **30.11.1995 JP 336114/95**

(71) Applicant: **Dow Corning Toray Silicone Company, Limited**
**Tokyo 103 (JP)**

(72) Inventors:
- **Nakanishi, J., c/o Dow Corning Toray Sil. Co., Ltd**
  **Ichihara-shi, Chiba Prefecture (JP)**
- **Yoshitake, M.,**
  **c/o Dow Corning Toray Sil. Co., Ltd**
  **Ichihara-shi, Chiba Prefecture (JP)**

(74) Representative: **Dowden, Marina**
**Elkington and Fife**
**Prospect House,**
**8 Pembroke Road**
**Sevenoaks, Kent TN13 1XR (GB)**

(54) **Adhesives**

(57) Disclosed herein is an adhesive composition having a viscosity of up to 1,000 Pa.s (10,000 Poise) at 25°C comprising a mixture of (A) 100 parts by weight of (i) a compound having at least one radiation polymerizable group per molecule and having at least one hydrolyzable group bonded to a silicon atom per molecule, or (ii) a mixture of a compound having at least one radiation polymerizable group and a compound having at least one hydrolyzable group bonded to a silicon atom, and (B) 30-200 parts by weight of a tackifying resin. The compositions of this invention optionally comprise a photopolymerization initiator and/or a condensation catalyst. The adhesive of this invention is useful for adhering a solid support to a substrate.

EP 0 776 956 A2

## Description

The present invention introduces adhesives which maintain their fluidity in the absence of moisture and light. Moreover, they quickly form a nonfluid adhesive material when exposed to high-energy radiation, such as ultraviolet light or electron beams. Thereafter, they produce strong adhesive characteristics and cure rapidly when exposed to moisture in the air.

Adhesives have been used for product assembly in the electric, electronic, and mechanical industries. Development of an adhesive that quickly adheres to substrates to shorten the manufacturing process and to improve productivity has been long desired. Several adhesives have been disclosed in the art. For example, a rubber adhesive diluted in an organic solvent and then evaporated, has been taught which could obtain the adhesive effect for a short time. However, this rubber adhesive caused air pollution because organic solvent was evaporated, and the recovery of the adhesive also required a large amount of energy.

Hot-melt adhesives have been disclosed that do not contain solvents, but these did not retain the adhesion effect for a long time. Moreover, hot-melt adhesives require both heating and melting, so a special apparatus has to be used. Finally, the adhered material loses adhesion at high temperatures. Therefore, a method for prevention of fusion or softening under heat due to moisture after an adhesive material was made, which employed crosslinking of the polymer components of an adhesive, was developed. Patents were applied for various compositions. However, the same apparatus as used in hot-melt adhesives was also needed for these compositions.

Adhesive compositions requiring neither heating nor fusion, maintaining fluidity before use, and forming an adhesive material when exposed to high energy radiation, such as ultraviolet light or electron beams, after being coated onto the surface of a substrate have also been disclosed in JP-As 61-148281, 4-213380, and 4-255782. However, because these compositions contain compounds having low molecular weights, they sometimes have a strong odor or they are not sensitive enough to be cured by high energy radiation.

The present invention is an adhesive composition having a viscosity of up to 1,000 Pa.s (10,000 Poise) at 25°C comprising (A) 100 parts by weight of a compound having at least one functional group polymerizable by high-energy radiation per molecule, and at least one hydrolyzable group bonded to a silicon atom per molecule, and (B) 30-200 parts by weight of a tackifying resin.

It is an object of the present invention to provide an adhesive composition that maintains fluidity in the absence of moisture and light, quickly forms a nonfluid adhesive material when exposed to high-energy radiation, such as ultraviolet light or electron beams, and has strong adhesion obtained by accelerated cure with the moisture in the air.

Any polymer containing at least one functional group that is polymerized by high-energy radiation per molecule, and containing one or more hydrolyzable groups bonded to silicon atoms per molecule, may be used as our component (A). The main chain of the polymer may be a polyolefin such as polyethylene, polypropylene, polyisobutylene, polystyrene, polyacrylate, or polymethylmethcrylate; a polyoxyalkylene such as polyoxyethylene or polyoxypropylene; a polyester such as polyethylene adipate or polybutylene adipate; an organopolysiloxane such as polydimethylsiloxane or polymethylphenylsiloxane; and their copolymers. The viscosity of this polymer is preferably from 1-1,000 Pa.s (10-10,000 Poise), and it is especially preferred that the viscosity is 10-100 Pa.s (100-1000 Poise). The copolymer is either a straight chain or branched chain copolymer.

Any functional groups that are polymerizable by high-energy radiation, and which cause a composition of the present invention to lose fluidity, are suitable for use on this polymer. Radiation polymerizable groups suitable in polymer (A) are acryl groups such as acrylamide or acryloxy; methacryl groups such as methacrylamide or methacryloxy; epoxy groups such as glycidoxy or glycidyl; vinyloxy; mercapto groups; and alkenyl groups such as vinyl, allyl, or hexenyl. Neither a mercapto group or an alkenyl group alone is sufficient; however, both groups can carry out a suitable reaction when they are used together. Therefore, both groups must be present on a single polymer, or a mixture of a compound having at least one radiation polymerizable group per molecule and a compound having at least one hydrolyzable group bonded to a silicon atom per molecule, must always be employed. For example, when a mercapto group is the radiation polymerizable group, an alkenyl group must be present on the same polymer, or a mixture of a compound having at least one alkenyl group and a compound having at least one mercapto group must be present.

Examples of hydrolyzable groups which are bonded to a silicon atom include alkoxy groups such as methoxy or ethoxy; acyloxy groups such as acetoxy; oximo groups such as ethylmethyl oximo; allyloxy; propenyloxy or butenyloxy groups; and aminoxy groups such as N,N-diethyl aminoxy.

The two types of functional groups can be bonded in any position. They can be bonded at the chain ends of the polymer (i.e. endblocked), the side chains of the polymer (i.e. pendant), or both. The polymerizable functional group may be bonded to a silicon atom which also has a hydrolyzable group bonded to it. The content of each group in the compound, or the content of each group in a mixture of compounds, is from 100 to 1,000,000 grams equivalent weight, and preferably is from 1000 to 100,000 grams equivalent weight.

Compound (i) of component (A) is preferably a compound having its average formula selected from the group consisting of

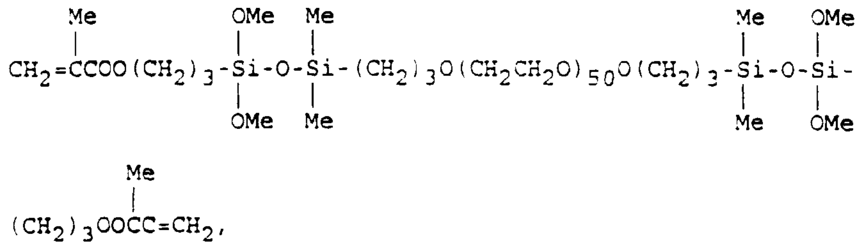

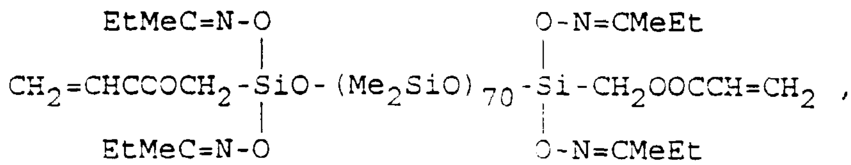

and

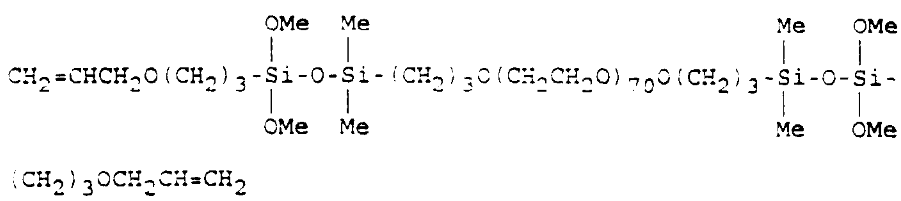

Mixture (ii) of component (A) is preferably a mixture of compounds selected from the group consisting of a mixture of

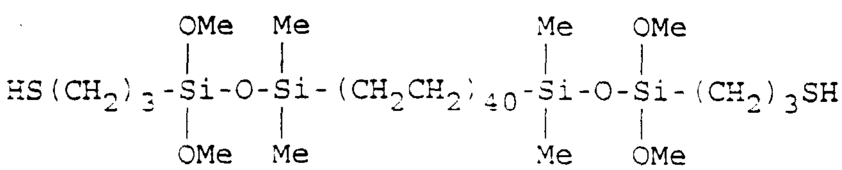

and

$$CH_2=CHCH_2-(CH_2CH_2)_{10}-CH_2CH=CH_2,$$

a mixture of

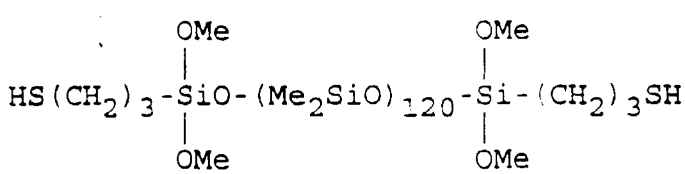

and

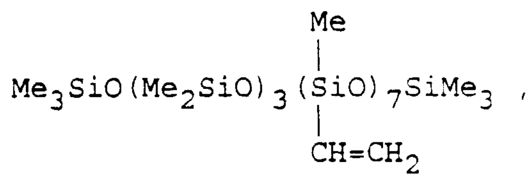

or a mixture of

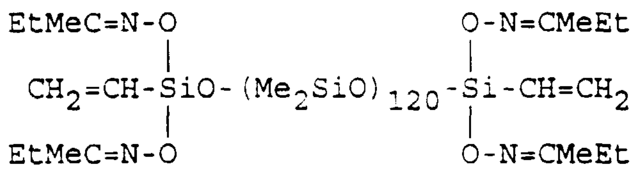

and

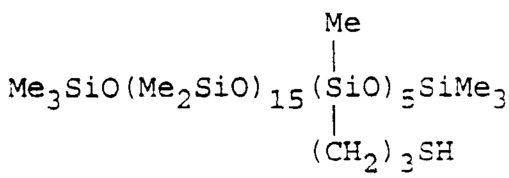

wherein Me and Et are, and hereafter denote, methyl and ethyl, respectively.

The compounds of component (A) are prepared by a variety of methods. Preferably, these compounds are prepared by reacting an organic polymer having a hydroxyl (OH) group, or a silanol group, with an organosilane in the presence of a base or acid catalyst.

Examples of tackifying resins suitable as Component (B) include rosin derivatives such as rosin, hydrogenated rosin, hydrogenated and polymerized rosin, rosin glycerin esters, and rosin pentaerythritol esters; terpene phenol resins; ketone resins; petroleum resins; coumarone-indene resins; phenol resins; and silicone resins. Silicone resins, having either a three-dimensional structure or a net structure, and which are soluble in component (A) are preferred as our component (B). The tackifying resin may be used alone or may comprise two or more of these resins in combination.

Component (B) is preferably present at 30-200 parts by weight, and it is highly preferred that 50-150 parts by weight of (B) be present, per 100 parts by weight of component (A). When less than 30 parts by weight of (B) is used, unsatisfactory adhesive effects may result. When more than 200 parts by weight are used, the viscosity of the composition is excessive, making it difficult for the composition to function as an adhesive.

The compositions of this invention may further comprise a photopolymerization initiator and/or a condensation catalyst. The composition of this can also contain a variety of optional ingredients including fillers such as fumed silica, plasticizers, thixotropic agents, heat-resistance agents, coloring agents, and adhesive agents.

The photopolymerization initiator is selected such that it has a suitably sensitive wavelength. For example, when the radiation polymerizable group in component (A) is acryl, methacryl, mercapto, or alkenyl, a photopolymerization initiator which generates free radicals by irradiation is preferable. When an epoxy group or a vinyloxy group is present, a photopolymerization initiator which generates cations by radiation is preferable. Suitable photopolymerization initiators are exemplified by acetophenones such as trichloroacetophenone, 2,2-diethoxyacecophenone, 2,2-dimethoxy-2-phenylacetophenone; and benzophenones such as benzophenone, methylbenzophenone, p-chlorobenzophenone, p-dimethylaminobenzophenone. If a photopolymerization initiator is used, it is preferably used in an amount from 0.1 to 5 parts by weight, per 100 parts by weight of components (A)+(B).

Suitable condensation catalysts are those compounds which accelerate both hydrolysis and condensation of a hydrolyzable group that is bonded to a silicon atom. Suitable catalysts are exemplified by titanic acid esters or organotin compounds. If a condensation catalyst is used, it is preferably used in an amount from 0.1 to 5 parts by weight, per 100 parts by weight of components (A)+(B).

The viscosity of the adhesive compositions of this invention may be as high as 1,000 Pa.s (10,000 Poise), but is

preferably 10 to 800 Pa.s (100 to 8,000 Poise) at 25°C. When the viscosity is greater than 1,000 Pa.s (10,000 Poise), it is difficult to coat the various substrates. The viscosity of our adhesive composition is suitably controlled by varying the weight-ratio of component (A) to component (B).

The adhesive compositions of this invention are made by homogeneously mixing components (A) and (B), and any optional components. Mixing is preferably carried out in the absence of moisture and light. If light is present when our composition is prepared, it is preferable that oxygen Is present in the dry atmosphere.

The compositions of this invention form an adhesive exhibiting favorable adhesion characteristics when exposed to high energy radiation, such as ultraviolet light or electron beams, after being coated onto various substrates. Thus, adhesion is achieved by slightly bringing the material, or solid support to be adhered, into contact with the coated substrate that has been exposed to high-energy radiation. The surface of the support, and the substrate to which the support is adhered, may be any known solid material such as metals, like aluminum, silver, copper, iron and their alloys; porous materials such as paper, wood, leather, and fabrics; organic polymeric materials, such as polyolefins including polyethylene and polypropylene; fluorocarbon polymers such as polytetrafluoroethylene and polyvinylfluoride; silicone elastomers or resins; polystyrene; polyamides such as nylon, polyimides, polyesters and acrylic polymers; painted surfaces; siliceous materials such as concrete, bricks, or cinderblocks; and glasses such as glass cloth.

Examples of high energy radiation include ultraviolet light, electron beams, radiation generated from high-pressure mercury lamps, xenon lamps, or metal halide lamps. Ultraviolet light includes visible light generated from sunlight or by a fluorescent lamp. The amount of ultraviolet light preferably ranges from 20-5000 mJ/$cm^2$. The amount of electron beams or radiation is preferably 0.5-50 Mrad. As the viscosity of our composition is maintained for 10 min to 2 hours, the material to be adhered to a surface coated with our adhesive is also accomplished during this time. If the article is then allowed to stand after adhesion is complete, crosslinking occurs due to moisture in the atmosphere which results in the transformation of an adhesive layer to an elastic material that is strong enough for adhesion to be achieved. This crosslinking usually requires 2 to 100 hours.

Useful articles which are prepared with our adhesive compositions include pressure sensitive tapes, labels, emblems and other decorative or informational signs.

Example 1

30 grams (g) of a compound having the average formula

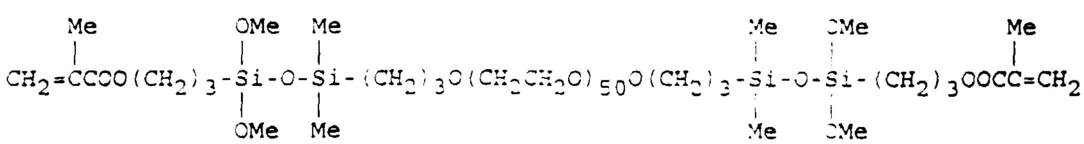

was homogeneously mixed with 18 (g) of rosin glycerin ester, 0.5 (g) of benzophenone, and 0.1 (g) of tetrabutoxytitanium in a dry atmosphere. The resulting adhesive composition had a viscosity of 800 Pa.s (8000 Poise,) at 25°C. A glass test panel (having a thickness of 5 mm and a depth of 2.5 cm) was evenly coated with this composition to a thickness of approximately 100 mm. After standing for 5 minutes, the film was exposed to 500 mJ/$cm^2$ of ultraviolet light using a conveyer type of ultraviolet light irradiation apparatus (a 120 J/s (Watt; high-pressure mercury lamp). Then, after being allowed to stand for 5 minutes, an untreated glass test panel as described above was adhered to the coated surface of the treated test panel. An adhered surface area of 2.5 $cm^2$ was obtained. After a certain amount of time had passed (5 minutes, 2 hours, 4 hours, and 24 hours respectively), the elongation shearing adhesion (kg/$cm^2$) was measured according to JIS (Japanese Industrial Standard) K 6850. The results are shown in Table I below.

Example 2

30 (g) of a polydimethylsiloxane having the average formula

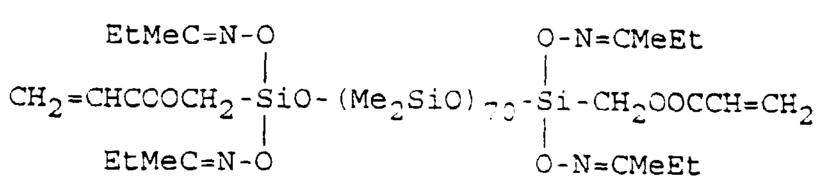

was homogeneously mixed with 45 (g) of a 70% xylene solution of silicone resin having the average formula $(Me_3SiO_{1/2})_{45}(SiO_{4/2})_{55}$. The xylene was then removed by heating under reduced pressure. After the reaction product was cooled, 0.5 (g) of 2,2-dimethoxy-2-phenylacetophenone was added, and the resulting composition was then homogeneously mixed in a dry atmosphere. An adhesive composition was produced having a viscosity of 20 Pa.s (200 Poise) at 25°C. The elongation-shearing adhesion (kg/cm$^2$) of the adhesive composition, after being exposed to 500 mJ/cm$^2$ of ultraviolet light as described in Example 1, was measured by using the same procedure as described in Example 1. The results are shown in Table I below.

Comparative Example 1

30 grams (g) of a compound having the average formula

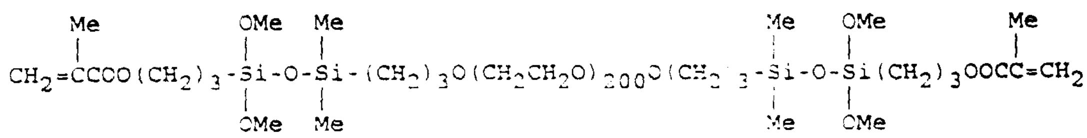

was homogeneously mixed with 0.2 (g) of benzophenone and 0.05 (g) of tetrabutoxytitanium in a dry atmosphere. The resulting composition had a viscosity of 12 Pa.s (120 Poise) at 25°C. After being exposed to ultraviolet light as described in example 1, the elongation-shearing adhesion (kg/cm$^2$) was measured by the same procedure that was used in Example 1. Results are shown in Table I.

Comparative Example 2

30 (g) of a polydimethylsiloxane having the average formula

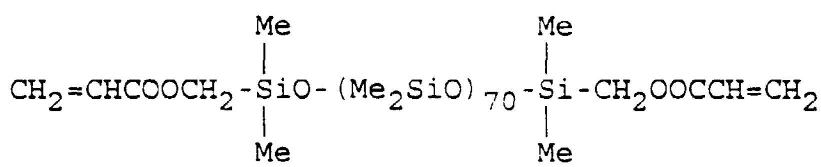

was homogeneously mixed with 45 (g) of a 70% xylene solution of silicone resin having the average formula $(Me_3SiO_{1/2})_{45}(SiO_{4/2})_{55}$. The xylene was then removed by heating under reduced pressure. After the reaction product was cooled, 0.5 (g) of 2,2-dimechoxy-2-phenylacetophenone was added, and the resulting composition was then homogeneously mixed in a dry atmosphere. An adhesive composition was produced having a viscosity of 18 Pa.s (180 Poise) at 25°C. The elongation-shearing adhesion (kg/cm$^2$) of the adhesive composition, after being exposed to 500 mJ/cm$^2$ of ultraviolet light as described in Example 1, was measured by using same procedure as described in Example 1. The results are shown in Table I below.

Table I

| | ELONGATION SHEARING ADHESION | | | |
|---|---|---|---|---|
| | AFTER 5 MINUTES | AFTER 2 HOURS | AFTER 4 HOURS | AFTER 24 HOURS |
| EXAMPLE 1 | 2.4 | 4.4 | 5.2 | 7.9 |
| EXAMPLE 2 | 2.4 | 3.2 | 4.1 | 6.8 |
| COMP EX. 1 | 0.10 | 0.25 | 0.51 | 0.84 |
| COMP EX. 2 | 2.1 | 2.2 | 2.1 | 2.0 |

It is clear from Table I that our adhesive compositions have superior elongation shearing adhesion properties than did the compositions in the comparative examples.

## Claims

1. An adhesive composition having a viscosity of up to 1,000 Pa.s (10,000 Poise) at 25°C comprising a mixture of:

    (A) 100 parts by weight of:

    (i) a compound having at least one radiation polymerizable group per molecule and having at least one nydrolyzable group bonded to a silicon atom per molecule or
    (ii) a mixture of a compound having at least one radiation polymerizable group and a compound having at least one hydrolyzable group bonded to a silicon atom, and

    (B) 30-200 parts by weight of a tackifying resin.

2. A composition according to Claim 1, wherein the radiation polmerizable group is selected from the group consisting of acrylamide, acryloxy, methacrylamide, methacryloxy, glycidoxy, glycidyl, vinyloxy, mercapto, vinyl, and allyl.

3. A composition according to Claim 1, wherein the hydrolyzable group is selected from the group consisting of methoxy, ethoxy, acetoxy, ethylmethyl oximo, and N,N-diethyl aminoxy.

4. A composition according to Claim 1, wherein (i) is a compound having its average formula selected from the group consisting of

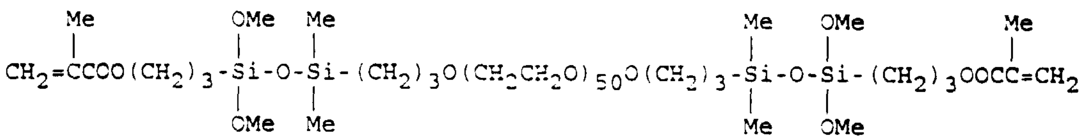

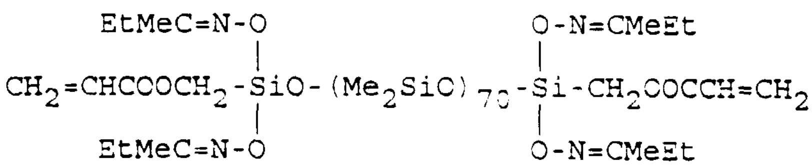

,

and

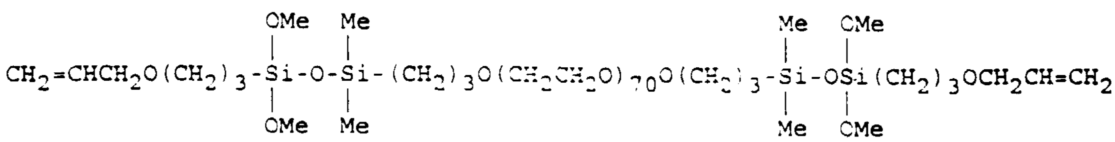

5. A composition according to Claim 1, wherein (ii) is a mixture of compounds selected from the group consisting of: a mixture of

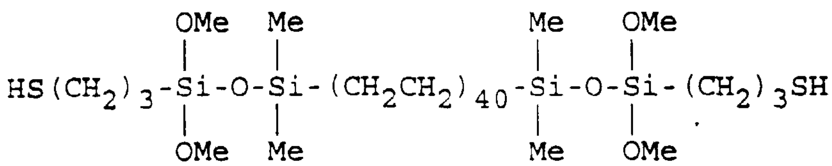

and

$CH_2{=}CHCH_2\text{-}(CH_2CH_2)_{10}\text{-}CH_2CH{=}CH_2$,

a mixture of

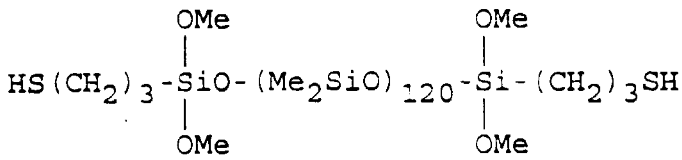

and

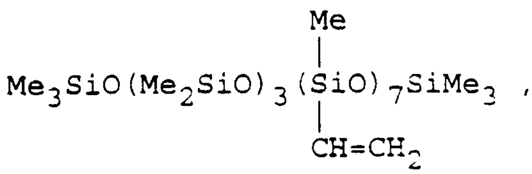

and
a mixture of

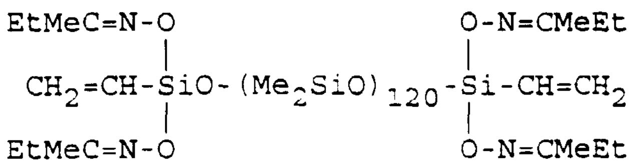

and

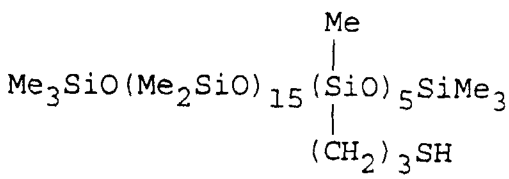

wherein Me denotes methyl and Et denotes ethyl.

**6.** A composition according to any of claims 1 to 5, wherein (B) is selected from the group consisting of rosin, hydrogenated rosins, hydrogenated and polymerized rosins, rosin glycerin esters, rosin pentaerythritol esters, terpene phenol resins, ketone resins, petroleum resins, coumarone-indene resins, phenol resins, and silicone resins.

**7.** A composition according to any of claims 1 to 6 which further comprises a photopolymerization initiator.

**8.** A composition according to claim 6, wherein the photopolymerization initiator is selected from acetophenones or benzophenones.

**9.** A composition according to any of claims 1 to 8 which further comprises a condensation catalyst.

**10.** A composition according to claim 9, wherein the condensation catalyst is selected from the group consisting of titanic acid esters and organotin compounds.